# EUROPEAN PATENT SPECIFICATION

(11) **EP 3 353 958 B1**
(45) Date of publication and mention of the grant of the patent: **04.11.2020**
(21) Application number: 16849814.5
(22) Date of filing: 23.09.2016
(51) Int. Cl.: H04L 12/26

(54) **METHOD AND APPARATUS TO SECURELY MEASURE QUALITY OF SERVICE IN A NETWORK**
VERFAHREN UND VORRICHTUNG ZUR SICHEREN MESSUNG DER DURCHGEHENDEN DIENSTQUALITÄT IN EINEM NETZWERK
PROCÉDÉ ET APPAREIL POUR MESURER DE MANIÈRE SÉCURISÉE LA QUALITÉ DE SERVICE DE BOUT EN BOUT DANS UN RÉSEAU

(30) Priority: 25.09.2015 US 201514865136
(43) Date of publication of application: 01.08.2018
(73) Proprietor: Intel Corporation, Santa Clara, CA 95054 (US)
(72) Inventor: SKERRY, Brian J., Gilbert, Arizona 85233 (US); SLAIGHT, Thomas M., Beaverton, Oregon 97006 (US); WANG, Ren, Portland, Oregon 97229 (US); SOOD, Kapil, Beaverton, Oregon 97006 (US)
(74) Representative: Rummler, Felix
(86) International application number: PCT/US2016/053583
(87) International publication number: WO 2017/053893

(56) References cited:
- WO-A1-2014/142723
- WO-A1-2015/040624
- JP-A- 2014 036 289
- US-A- 6 097 699
- US-A1- 2002 055 999
- US-A1- 2014 280 834
- US-A1- 2015 033 222
- US-B2- 9 063 769

## Description

### BACKGROUND INFORMATION

Access to computer networks has become a ubiquitous part of today's computer usage. Whether accessing a Local Area Network (LAN) in an enterprise environment to access shared network resources, or accessing the Internet via the LAN or other access point, it seems users are always logged on to at least one service that is accessed via a computer network. Moreover, the rapid expansion of cloud-based services has led to even further usage of computer networks, and these services are forecast to become ever-more prevalent.

Networking is facilitated by various types of equipment including routers, switches, bridges, gateways, and access points. Large network infrastructure typically includes use of telecommunication-class network elements, including switches and routers made by companies such as Cisco Systems, Juniper Networks, Alcatel Lucent, IBM, and Hewlett-Packard. Such telecom switches are very sophisticated, operating at very-high bandwidths and providing advanced routing functionality as well as supporting different Quality of Service (QoS) levels.

Private networks, such as Local area networks (LANs), are most commonly used by businesses and home users. It is also common for many business networks to employ hardware- and/or software-based firewalls and the like.

In recent years, virtualization of computer systems has seen rapid growth, particularly in server deployments and data centers. Under a conventional approach, a server runs a single instance of an operating system directly on physical hardware resources, such as the CPU, RAM, storage devices *(e.g.,* hard disk), network controllers, I/O ports, *etc.* Under one virtualized approach using Virtual Machines (VMs), the physical hardware resources are employed to support corresponding instances of virtual resources, such that multiple VMs may run on the server's physical hardware resources, wherein each virtual machine includes its own CPU allocation, memory allocation, storage devices, network controllers, I/O ports *etc.* Multiple instances of the same or different operating systems then run on the multiple VMs. Moreover, through use of a virtual machine manager (VMM) or "hypervisor," the virtual resources can be dynamically allocated while the server is running, enabling VM instances to be added, shut down, or repurposed without requiring the server to be shut down. This provides greater flexibility for server utilization, and better use of server processing resources, especially for multi-core processors and/or multi-processor servers.

Under another virtualization approach, container-based OS virtualization is used that employs virtualized "containers" without use of a VMM or hypervisor. Instead of hosting separate instances of operating systems on respective VMs, container-based OS virtualization shares a single OS kernel across multiple containers, with separate instances of system and software libraries for each container. As with VMs, there are also virtual resources allocated to each container.

Deployment of Software Defined Networking (SDN) and Network Function Virtualization (NFV) has also seen rapid growth in the past few years. Under SDN, the system that makes decisions about where traffic is sent (the control plane) is decoupled for the underlying system that forwards traffic to the selected destination (the data plane). SDN concepts may be employed to facilitate network virtualization, enabling service providers to manage various aspects of their network services via software applications and APIs (Application Program Interfaces). Under NFV, by virtualizing network functions as software applications, network service providers can gain flexibility in network configuration, enabling significant benefits including optimization of available bandwidth, cost savings, and faster time to market for new services.

Network service providers typically offer different levels of service, which enables customers who are willing to pay more to send their data at faster data rates, while lower priority traffic is transferred (effectively) at lower data rates. The network service providers typically provide Service Level Agreements (SLAs) that specify the level of performance to be provided for the service. A typical SLA includes measureable performance attributes relating to network data transfer rates and latencies.

Document US 9 063 769 B2 discloses a packet transmission delay measurement between a hardware implemented network interface card and a network interface card of virtual machine of a server.

Securely measuring end-to-end Quality of Service (QoS) in networks is a challenging problem. Various approaches exist, such as aggregating network hop latencies using pinging or the like, but their results are less than satisfactory and variable network stack processing latencies can be added to the measurements, creating artificial jitter. The problem is even more challenging for virtualized environments employing SDN components and NFV.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views unless otherwise specified:
Figure 1 is a schematic block diagram illustrating a set of components implemented at endpoints to effect secure end-to-end QoS measurement in a network, in accordance with one embodiment;
Figure 2 is a schematic block diagram illustrating an exemplary implementation of QoS measurements between two endpoints 100a and 100b comprising a pair of Ethernet Controllers, according to one embodiment;
Figure 3 is a table illustrating an exemplary set of data used by an external monitor to calculate QoS measurements;
Figure 4 is a is schematic diagram illustrating an architecture for a compute node hosting a virtualized environment including a virtual switch having ports configured to perform operations to facilitate secure end-to-end QoS measurements;
Figure 4a is a schematic diagram illustrating a second view of the compute node architecture illustrating the components of Figure 1 being implemented in the virtual switch;
Figure 4b is a schematic diagram illustrating a third view of the compute node architecture focusing on the processing path taken by an IP packet; and
Figure 5 is a schematic diagram of a host platform hardware and software architecture under which aspect of the embodiments herein may be implemented.

### DETAILED DESCRIPTION

Embodiments of methods and apparatus to securely measure quality of service end to end in a network are described herein. In the following description, numerous specific details are set forth to provide a thorough understanding of embodiments of the invention. One skilled in the relevant art will recognize, however, that the invention can be practiced without one or more of the specific details, or with other methods, components, materials, *etc.* In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

For clarity, individual components in the Figures herein may also be referred to by their labels in the Figures, rather than by a particular reference number. Additionally, reference numbers referring to a particular type of component (as opposed to a particular component) may be shown with a reference number followed by "(typ)" meaning "typical." It will be understood that the configuration of these components will be typical of similar components that may exist but are not shown in the drawing Figures for simplicity and clarity or otherwise similar components that are not labeled with separate reference numbers. Conversely, "(typ)" is not to be construed as meaning the component, element, *etc.* is typically used for its disclosed function, implement, purpose, *etc.*

In accordance with aspects of the embodiments disclose herein, methods and apparatus for securely measuring end-to-end network Quality of Service are provided. Under the disclosed techniques, it is possible to measure QoS end-to-end through the use of an Out-of-Band (OOB) mechanism that does not require changes to the virtual network function.

In one embodiment, a specially identified packet that is configured to be recognized by an Ethernet controller or the like is used. Upon receipt of this packet (on ingress) and/or at time of transmission of the packet (on egress), timestamps are used to measure latencies and report the corresponding measurements to an external control system. This allows Quality of Service measurements to be made without any changes to a virtual network function. In addition, this approach may be implemented in a virtual switch, *e.g.,* a software solution, where a similar technique is followed. This allows the VNF portion of the timestamp to be separated from the vSwitch portion. Optionally, both mechanisms may be used together, supporting precise determination of where QoS issues reside.

This approach differs from existing solutions, such as IP pings, in that it bypasses the host's TCP/IP stack, which typically may introduce variable latency and/or jitter. Furthermore a solution such as an IP ping cannot be implemented for accelerated data paths that bypass the normal TCP/IP stack, such as in the case of Intel Data Plane Development Kit (DPDK) or OpenDataPlane (ODP). The proposed solution can be included in existing packet flows, and does not require the transmission of separate packets.

In one embodiment the end points and the external control system run trusted time synchronization protocols (*e.g.* a Secure Network Time Protocol) that are based on Intel Architecture (IA)-based tamper-resistant clock source(s). In one embodiment, the IA-based secure clock is generated from a hardware-based Root-of-Trust and delivered out-of-band to any Intellectual Property (IP) block on the same SoC (*e.g*., userver) or different processor that would use this clock. For example, the hardware-based Root-of-Trust may include use of a Converged Security and Manageability Engine (CSME), a Converged Security Engine (CSE), a Manageability Engine (ME), and Innovation Engine (IE), or a processor/SoC that supports Secure Guard Extensions (SGX). This embodiment enhances the protocol to allow a tamper-resistant capability for measuring end-to-end QoS across the network. It is expected that for secure QoS measurement and delivery, which is a requirement in strict SLA agreements in Operator networks, this security capability is fundamental.

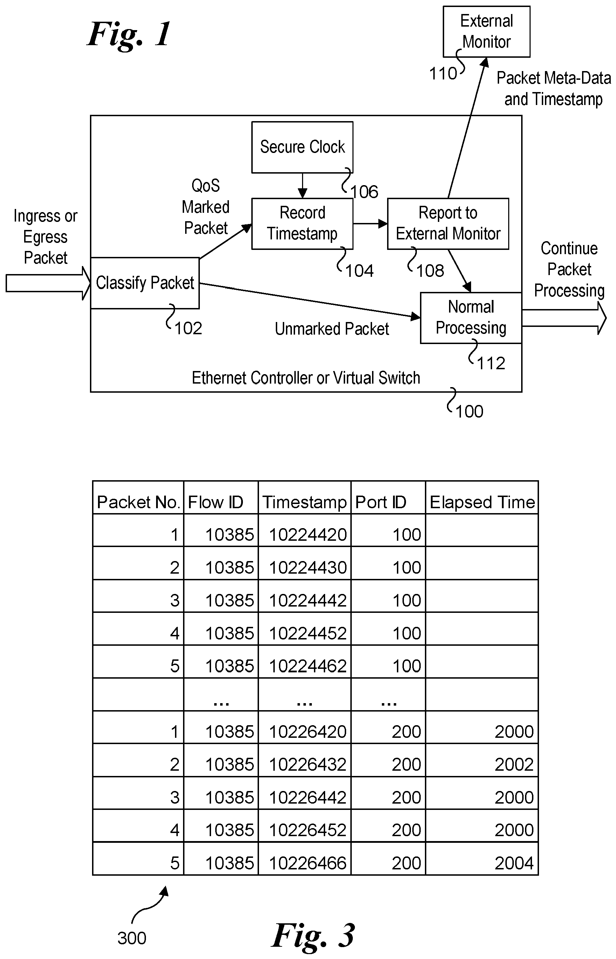

The basic process and components for implementing secure end-to-end QoS measurements, according to one embodiment, is illustrated in Figure 1. In this example, the technique is implemented using an Ethernet controller or virtual switch 100. As shown, in connection with processing of an inbound packet (*i.e.,* on ingress), the packet is classified in a block 102 as either a marked (for QoS measurement purposes) or unmarked. Various schemes may be used for marking the packet, such as use of a flag in a packet header field, or a pre-determined value for a packet header field or sub-field, values in a combination of fields, or a hash on the values of one of more fields. For example, the following non-limiting list shows possible fields that may be used for marking.

### Source and or Destination address

### TCP or UDP Port

Metadata in a service header (including QoS class information, e.g., Network Services Header (NHS))
Other fields in the IP header (*e.g.* TOS in IPv4 or Flow Label in IPv6)
Any other available fields in the packet header
Once the packet has been classified, it will be processed along a marked packet path (if the classification results in a match), or an unmarked packet path.

As shown, a timestamp is recorded for each of the marked packets in a block 104 using a secure clock 106. In a block 108, the timestamp, along with information from which the packet and/or packet flow can be identified (identifying metadata) is reported to an external monitor 110. For example, depending on the particular classification scheme, identifying metadata for packets for a given flow may include a flow ID in one of the packets' header fields, or otherwise a flow ID may be dynamically determined using a hash on n-tuple values defined by corresponding header field values (*e.g.,* a 5-tuple hash on source IP address, destination IP address, source port, destination port, and protocol field values, or a hash on any number of header fields). The identifying metadata may also include the QoS class for the flow, if such data is included in one of the packet header fields. The QoS class may also be based on a packet protocol (*e.g.,* TCP, 802.11, *etc*.), rather than a separate QoS field. In one embodiment, the data reported to the external monitor includes information identifying the endpoint (*e.g.,* an OOB or in-band address of a physical or virtual port) at which the timestamp was added.

After being processed by block 108, the packet is forwarded for normal packet processing for the Ethernet Controller of virtual switch, as depicted by a normal processing block 112. Packets that are not marked for QoS measurements are forwarded directly from packet classification block 102 to normal processing block 112; that is, they are handled in the conventional manner. Generally, the mechanism employed in block 108 for reporting the timestamp and identifying metadata may be implemented in either hardware, software, or a combination of the two. For example, in one embodiment of an Ethernet controller, the logic for block 108 is implemented in hardware (*e.g.,* using embedded hardware-based logic such as an array of logic gates or the like) or via embedded software that is executed on an embedded processor on the Ethernet controller.

For a virtual switch, which is a software-based entity, the logic for block 108 is likewise implemented in software.

In one embodiment, there exists a secure channel between the end-point entities performing the recording and the external monitor. For example, the secure channel can be established using third party certificates, or Root of trust keys. The external monitor is responsible for gathering the inputs from one or more Ethernet controllers and/or virtual switches to determine the overall QoS experienced by the packet as it traverses a packet processing path through a number of VNFs.

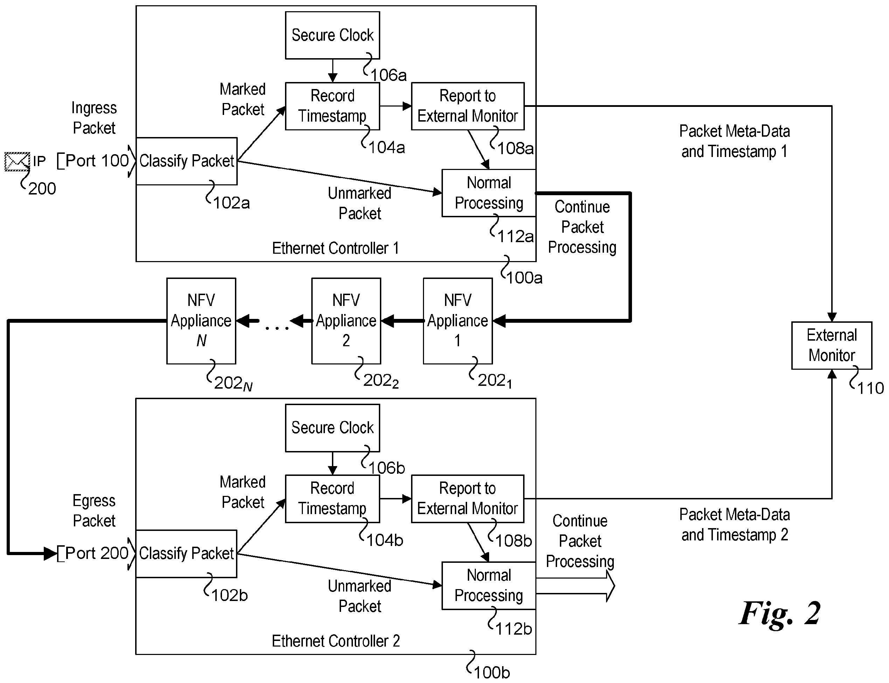

Figure 2 shows an exemplary implementation of QoS measurements between two endpoints 100a and 100b comprising Ethernet Controllers 1 and 2. Prior to performing the QoS measurements, external monitor 110 (or through some other mechanism) sets up Ethernet Controllers 1 and 2 to report on any packets received with a service header that indicates "QoS Measurement." In this example, the classification operations are implemented at an ingress (input) port 100 on Ethernet Controller 1 and an egress (output) port 200 on Ethernet Controller 2.

In response to receiving an IP packet 200 at port 100, a QoS classification is performed by classify packet block 102a, which detects a QoS match condition in accordance with one of the QoS marking schemes discussed above. The packet is forwarded to a record timestamp block 104a and then to a block 108a that reports the first timestamp along with packet identifying metadata to external monitor 110. At this point, the packet is further handled using normal processing, as indicated by a normal processing block 112.

Packets received at an input port of an Ethernet controller are typically forwarded internally to the OS for the host platform in which the Ethernet controller is installed, although advanced Ethernet controllers may be configured to perform some packet processing operations, including forwarding, without the assistance of an OS in the host. Packet processing may involve operations performed by one or more physical or virtual network appliances, such as load balancers, firewalls, traffic shapers, *etc.* As illustrated in Figure 2, the processing path of IP packet 200 includes *N* NFV appliances 202₁ - 202*_{N}* (also labeled NFV Appliance 1, 2, ... *N*). It is common in virtualized data center environments to chain NFV appliances in the manner shown; however, it is also possible to have separate NFV appliances, as well as a mixture of both physical network appliances and NVF appliances. Each NFV appliance is configured to perform one or more functions relating to packet processing, which adds latency to the overall packet processing process for the packet flow.

After processing is completed by NFV appliance 202*_{N}*, IP packet 200 is forwarded to egress port 200 on Ethernet Controller 2, which represents the second endpoint. As before, the packet is determined to be marked for QoS via a classify packet block 102b, a second timestamp is recorded in a record timestamp block 104b, and the second timestamp along with packet identifying metadata is reported to external monitor 110 by a block 108b.

During ongoing operations, external monitor 100 will receive report data from various QoS measurement endpoints (that are configured to perform QoS measurement operations). The report data can them be processed to measure end-to-end latency between selected QoS measurement endpoints. Figure 3 shows an exemplary table 300 of QoS measurement data reported to external monitor 110.

Under this embodiment, table 300 includes a Flow ID column, a Timestamp column, a Port ID column, and an Elapsed Time column. In addition, a Packet No. (number) column is shown for explanatory purposes - such a column may or may not be used, depending on the implementation. For simplicity, only data for a Flow ID having a value of 10385 is shown; however, it will be recognized that QoS data for multiple flows would typically be reported during ongoing operations.

The end-to-end QoS latency measurement can be determined by subtracting the difference between the timestamp values at the two endpoints, which in this example are ports 100 and 200, respectively. Individual packet identification can be handled using various schemes, including both implicit and explicit schemes. For example, a packet sequence number or segment number (that identifies a first packet in a TCP segment) may be used to explicitly define an individual packet identifier, wherein the combination of a flow ID and sequence/segment number may uniquely identify the packet. As an example of an implicit scheme, when the first packet for a given flow is received at a first endpoint there will be no data in the table for the flow, and thus the first packet can be assigned an implicit packet number of 1. When that same packet is received at the second endpoint, there will be no data in the table associated with the flow for the second endpoint, and thus by observing this packet is the first packet for the flow to hit the second endpoint, an implicit packet number of 1 can be assigned to the packet. Since packets in a flow can't pass each other, the implicit packet number for each packet (in the flow) for which QoS data is reported at a given endpoint can be incremented by 1. In this manner, timestamp values for individual QoS packets for flow can be matched to identify the correct pair of timestamps to use to calculate the latency for a given packet.

In addition to gathering QoS data at physical components, the QoS data may also be gathered a software-based components, such as virtual ports in a virtual switch. Virtual switches are commonly used in compute nodes (*e.g.,* compute platform such as a server) in data centers implementing SDN and NFV. It is further noted that such virtual switches may also be configured to perform virtual routing functionality; thus, as used here, a virtual switch may be configured to provide virtual switching and/or virtual routing functionality.

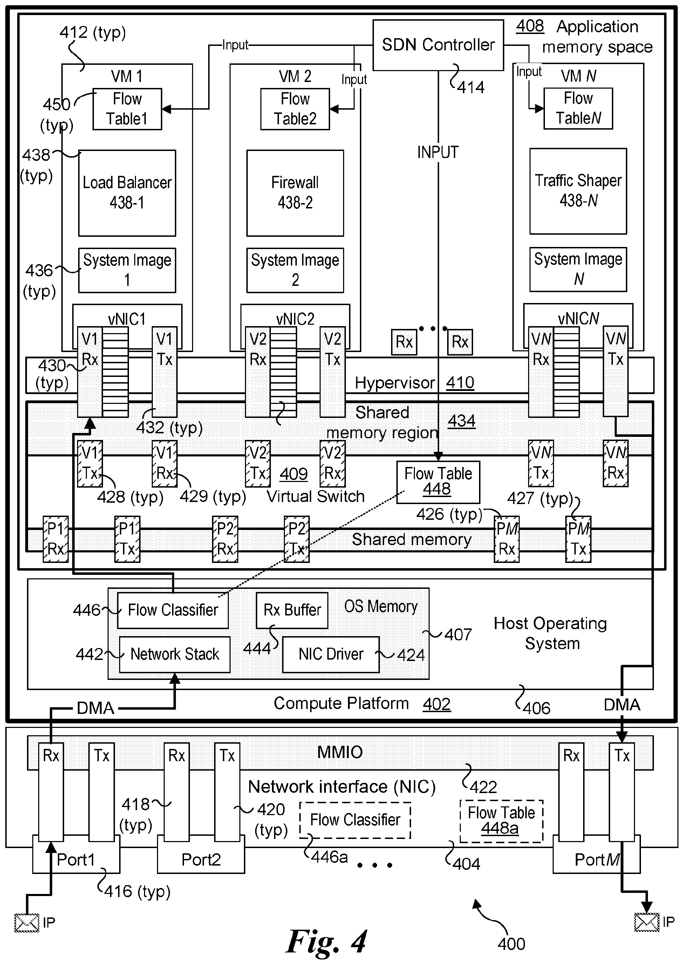

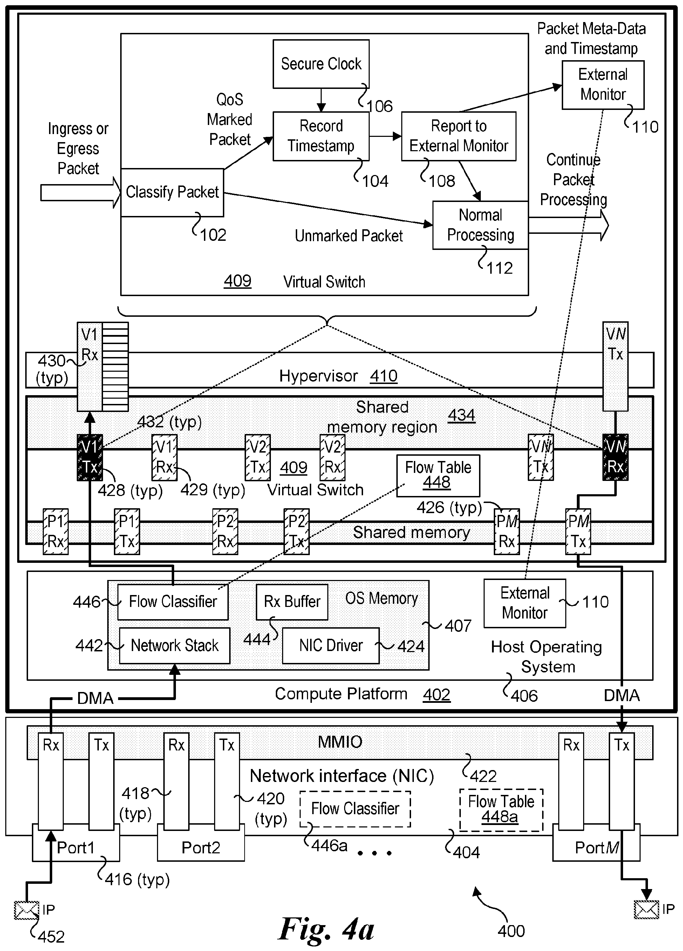

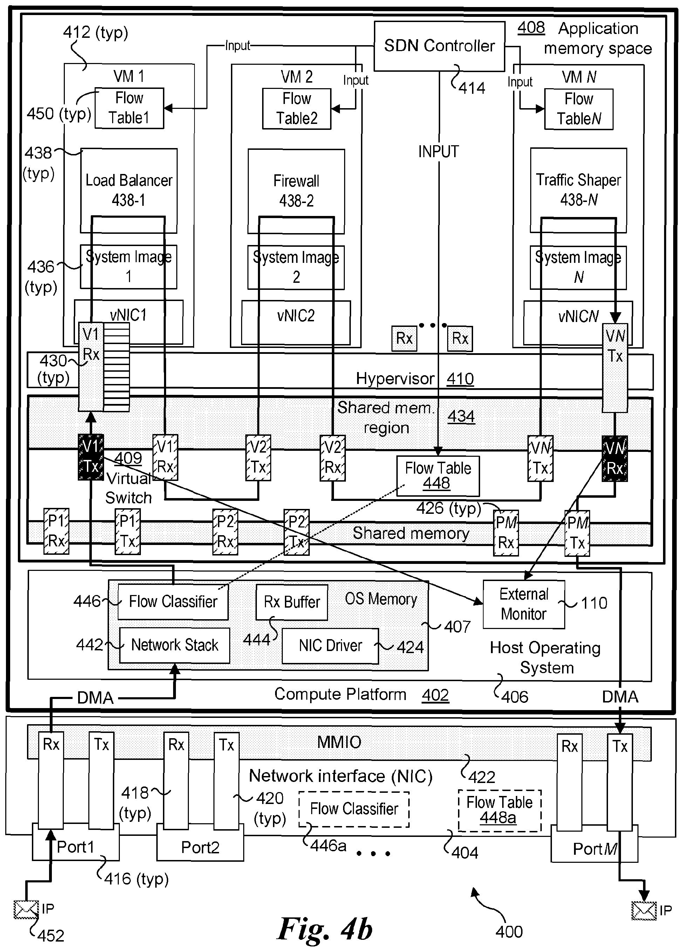

Figure 4 shows an architecture 400 for a compute node configured to perform packet processing operations through the use of SDN and NFV. Architecture 400 includes a compute platform 402 coupled to a network interface 404 that may be integrated on the compute platform (*e.g.,* as a network interface controller (NIC)) or otherwise operatively coupled to the compute platform (*e.g.,* as a PCIe (Peripheral Component Interconnect Express) card installed in a PCIe expansion slot provided by the host platform). Compute platform 402 includes a host operating system (OS) 406 running in OS memory 407 that is configured to host multiple applications running in an application memory space 408, which are depicted above host OS 406. This includes a virtual switch 409 and a hypervisor 410 that is configured to host *N* virtual machines 412, as depicted by virtual machines labeled VM 1, VM 2 and VM *N*. The software components further include an SDN controller 414.

Network interface 404 includes *M* network ports 416 labeled Port1, Port2 ... Port*M*, *where* M may be the same or different from N. Each network port 416 includes a receive (Rx) buffer 418 and a transmit (Tx) buffer 420. As used in the Figures herein, the Rx and Tx buffers and Rx and Tx queues that are depicted also may represent co-located Rx and Tx ports; to reduce clutter the Rx and Tx ports are not shown separately, but those skilled in the art will recognize that each Rx and Tx port will include one or more Rx and Tx buffers and/or queues.

Generally, a network interface may include relatively small Rx and Tx buffers that are implemented in the Rx and Tx ports, and then larger Rx and Tx buffers that may be implemented in input/output (IO) memory on the network interface that is shared across multiple Rx and Tx ports. In the illustrated example, at least a portion of the IO memory is memory-mapped IO (MMIO) 422 that is configured by a NIC driver 424 in OS memory 407 of host OS 406. MMIO 422 is configured to support direct memory access (DMA) data transfers between memory buffers in MMIO 422 and buffers in system memory on compute platform 402, as describe in further detail below.

Virtual switch 409 is a software-based entity that is configured to perform SDN switching operations internal to compute platform 402. In the illustrated example, virtual switch 408 includes a virtual Rx and Tx port for each physical Rx and Tx port on network interface 404 (*e.g.,* for each of Port1 - PortM), and a virtual Rx and Tx port for each of virtual machines VM 1 - VM N. The virtual ports on the network interface side are depicted as Rx virtual ports 426 and Tx virtual ports 427, while the virtual ports on the VM side are depicted as Rx virtual ports 428 and Tx virtual ports 429. As further shown, a portion of each of Rx and Tx virtual ports 426, 427, 428, and 429 are depicted as overlapping a shared memory region 434 of the system memory address space (also referred to as a shared address space). Additionally, pairs of Rx and Tx virtual ports 430 and 432 are further depicted as extending into a respective virtual NIC (vNIC), as shown by vNIC1, vNIC2 and vNIC*N*, wherein the vNICs are associated with respective virtual machines VM 1, VM 2 and VM *N.*

Each of virtual machines VM 1, VM 2, and VM *N* is shown including a system image 436 and an NFV application 438 with indicia identifying the corresponding VM the system images and applications are running on. For example, for VM 1 the system image is labeled "System Image 1" and the application is a load balancer 438-1. The other example NFV applications include a firewall 438-2 and a traffic shaper 438-*N*. Generally, each system image 436 may run one or more NFV applications 438, and the inclusion of one NFV application for each VM is merely for illustrative purposes. NFV application may also be implemented in ad container-based OS virtualization architecture (not shown).

Architecture 400 further depicts a network stack 442, an Rx buffer 444, a flow classifier 446 and a flow table 448 and flow tables 450. In addition, NIC 404 may include a flow classifier 446a and/or a flow table 448a.

In the following description, conventional packet processing performed in connection with ingress of a packet at a NIC port is discussed. This packet processing includes conventional packet classification operations; it will be understood that the QoS packet classification to determine whether a packet is marked as a QoS packet may be performed in a separate operation, using separate facilities, or may be combined with the packet classification operations performed at a NIC port.

Packet classification typically begins with inspection of the packet's header field values. Generally, packet header inspection may be done using one or more of the following schemes.

In one embodiment, packets are DMA'ed (*e.g.,* using a DMA write operation) from Rx buffers in port 416 into an Rx buffer 444 in OS memory 407. For example, in one embodiment memory spaces in the NIC port Rx buffers are allocated for FIFO (First-in, First-out) queues that employ circular FIFO pointers, and the FIFO head pointer points to the packet that is DMA'ed into Rx buffer 444. As an alternative, only the packet header is DMA'ed into Rx buffer 444. As yet another option, the packet header data is read "in place" without copying either the packet data or header into Rx buffer 444. In this instance, the packet header data for a small number of packets is read into a buffer associated with network stack 442 or a flow classifier 446 in host OS 406. Similarly, for flow classification that is performed by network interface 404 the packet header data may be read in place; however, in this instance the buffer is located in memory on network interface 404 that will typically be separate from MMIO 422 (not shown).

The result of flow classification returns a flow identifier (flow ID) for the packet. In one embodiment, the flow ID is added to a packet header field for packets that are received without an explicit flow ID, or, alternatively, a flow ID tag is attached to (*e.g.,* pre-pended) or the packet is encapsulated in a "wrapper" that includes a field for the flow ID.

As shown in Figure 4, in the illustrated embodiment packet classification is performed by flow classifier 446, which is part of the software-based OS packet processing components.

Optionally, flow classification may be performed in network interface 404 via a similar flow classifier 446a, in a manner that bypasses the OS. In one embodiment, a split classification scheme is implemented under which existing flows (*e.g.,* previously classified flows) are identified in network interface 404 by flow classifier 446a, while packets that don't belong to an existing flow are forwarded to flow classifier 446 for packet classification corresponding to a new packet flow. Information for the new packet flow is then provided to flow classifier 446a. Under another embodiment, the list of classified flows maintained by a flow classifier 446a is less than a complete list maintained by flow classifier 446, and operates similar to a memory cache where flows pertaining to more recent packets are maintained in flow classifier 446a on the NIC and flows for less recent packets are replaced.

The flow IDs are used as lookups into flow table 448, which is depicted as being part of virtual switch 409. In one embodiment, the flow table contains a column of flow ID's and a column of vNIC Rx port IDs such that given an input flow ID, the lookup will return a corresponding vNIC Rx port ID. In one embodiment, all or a portion of the data in flow table 448 is copied to flow tables 450 in the VMs.

In addition to flow table 448 being implemented in virtual switch 409, all or a portion of the flow table may be implemented in host OS 406 or network interface 404 (neither of these implementations is shown in Figure 4). In embodiments employing all or a portion of a flow table in network interface 404, the flow table entries will generally be determined by software in host OS 406 and populated via an interface provided by NIC driver 424 or the like.

The use of NFV applications, such as load balancer 438-1, firewall 438-2, and traffic shaper 438-*N,* enables functions that were previously performed by stand-alone or integrated hardware-based network appliances and/or cards to be performed in software. This provides for great flexibility in data center deployments, enabling packet processing operations to be chained via a sequence of software-based NFV components. Moreover, NFV components may be added, removed, and/or reconfigured without requiring any changes to the physical hardware.

Figure 4a depicts a second view of architecture 400 illustrating the components of Figure 1 being implemented in virtual switch 409. In particular, the software-based components for supporting QoS end-to-end measurements are implemented at multiple virtual ports in virtual switch 409, including the V1 Tx port and the VN Rx port. As further shown in Figure 4a and 4b, an external monitor 110 implemented as an application, service, or daemon or the like is running on host operating system 406. Optionally, the External monitor may be external to compute platform 402 (not shown). As yet another option, an external monitor may be implemented in hypervisor 410 (not shown).

Figure 4b shows a third view of architecture 400, focusing on the processing path taken by an IP packet 452. As shown, IP packet 452 is received at an input port of Port1 on NIC 404, is classified by either flow classifier 446a or flow classifier 446, and subsequently forward to the virtual input port of vNIC1 via the V1 Tx port on virtual switch 409. In conjunction with forwarding the IP packet, the operations for marked packets discussed above with reference to Figure 1 are performed at the V1 Tx port, which passes packet metadata from which the packet and/or packet flow can be identified, along with the timestamp. The IP packet is processed by load balancer 438-1 and then forwarded to firewall 438-2 via vNIC1, virtual switch 409, and vNIC2, as shown. After the packet is processed by Firewall 438-2, it is forwarded to traffic shaper 438-N via vNIC2, virtual switch 409, and vNIC 3.

Upon ingress at the V*N* Rx port of virtual switch 409, a second set of QoS measurement data is generated and reported to external monitor 110. The IP packet is then forwarded via the PM Tx port of virtual switch 409 to be transmitted outbound NIC 404 via the Tx port of Port*M*

As before, external monitor 110 configures the QoS measurement endpoints to collect and report QoS measurement data and maintains corresponding data structures (*e.g.,* one or more tables) containing timestamps and associated packet identifying metadata reported to it. In external monitor 110 and is further configured to calculate end-to-end QoS measurements or otherwise forward the data reported to it to another component (not shown) that is configured to perform the end-to-end QoS measurements. If the end-to-end QoS measurement does not meet the SLA requirements, appropriate mediation may take place, such as adding capacity to one or more VNFs.

In the foregoing examples, the QoS measurement components are implemented in an Ethernet Controller and a virtual switch. However, these are merely exemplary uses, as the techniques disclosed here may be implemented at other physical or software-based components. For example, aspects of the foregoing approaches may be implemented at a physical switch, such as a Top of Rack (TOR) switch, or a software switch (such as one based on general purpose IA servers).

The approaches can also be implemented in the presence of network overlay technologies, such as VXLAN (Virtual eXtensible Local Area Network) or NVGRE (Network Virtualization Generic Routing Encapsulation), and service chain headers (as currently being discussed in the IETF (Internet Engineering Task Force)). In the case of service function chaining, individual services can be monitored separately, whereas a solution such as ping would not see any difference between different services.

### Hardware-based Secure Clock

In order to guarantee the acquired QoS data is valid and reliable, time data is accessed from a hardware-based secure clock. Generally, the main functionality provided by the secure clock is a "tamper proof' way of getting a reliable measure of time. Such a hardware-based secure clock usually has a power backup that keeps it going, and the time cannot be adjusted on the platform without proper authorization (or possibly not adjusted at all). In some embodiments, a converged security engine (a separate IP) block that can manage/read the secure clock is used.

In another embodiment, a Trusted Platform Module (TPM) is used to access the secure clock. This is a good approach if the TPM is running as a firmware/software TPM on a security Root of Trust IP (such as a CSME or CSE). Optionally, a secure clock can be implemented through use of an ME, an IE, or processor, supporting SGX, as discussed above. Under a tamper proof clock, software running at the host level has no ability to modify the clock. In some cases, the secure clock cannot be modified even by physical intrusion into the system. In case of physical tampering, some secure clocks can detect physical tampering and be disabled by associated logic circuitry. In addition, there may be separate power source for ensuring the secure clock is continuously supplied with power.

More generally, a secure clock may be embodied as any hardware component(s) or circuitry capable of providing a secure timing signal and otherwise performing the functions described herein. For example, in one embodiment, the secure clock may generate a timing signal that is separate and functionally independent from other clock sources of a computing node or compute platform or the like. Accordingly, in such embodiments, the secure clock may be immune or resistant to alteration by other entities such as, for example, software executing on the computing node/platform. It should be appreciated that, in some embodiments, the secure clock may be embodied as standalone component(s) or circuitry, whereas in other embodiments the secure clock may be integrated with or form a secure portion of another component (e.g., the processor or SoC). For example, in some embodiments, the secure clock may be implemented via an on-chip oscillator and/or embodied as a secure clock of an ME. It should further be appreciated that the secure clock may be synchronized to the secure clocks of the other computing nodes and granularity may be of the order that can distinguish distinct message timings.

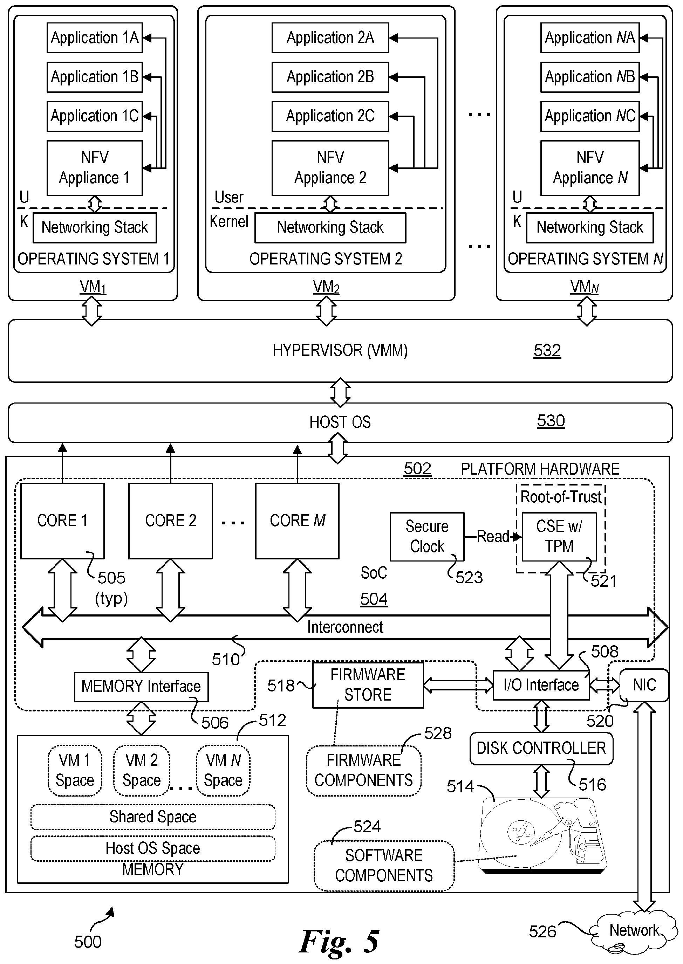

Figure 5 shows an exemplary host platform configuration 500 including platform hardware 502 and various software-based components. Platform hardware 502 includes a processor comprising a System on a Chip (SoC) 504 coupled to a memory interface 506 and an input/output (I/O) interface 508 via an interconnect 510. Memory interface 506 is configured to facilitate access to system memory 512, which will usually be separate from the SoC.

Interconnect 510 may comprise an interconnect hierarchy of multiple interconnect structures, with at least one level in the interconnect hierarchy comprising a coherent interconnect. I/O interface 508 is illustrative of various I/O interfaces provided by platform hardware 502. Generally, I/O interface 508 may be implemented as a discrete component (such as an ICH (I/O controller hub) or the like), or it may be implemented on an SoC. Moreover, I/O interface 508 may also be implemented as an I/O hierarchy, such as a Peripheral Component Interconnect Express (PCIe™) I/O hierarchy. I/O interface 508 further facilitates communication between various I/O resources and devices and other platform components. These include a non-volatile storage device, such as a disk drive 514 that is communicatively coupled to I/O interface 508 via a disk controller 516, a firmware store 518, a NIC 520, and various other I/O devices. In some embodiments, the firmware store is external to SoC 504, while in other embodiments at least a portion of the SoC firmware is stored on SoC 504.

SoC 504 further includes means for accessing data from a secure, tamper-resistent clock. For example, in the illustrated embodiment a converged security engine (CSE) 521 with a TPM that is part of a hardware-based Root-of-Trust component or sub-system is used to access (*e.g.,* read) a secure clock 523. In one embodiment, CSE 521 provides a software API that enables host-level software to access clock data (*e.g.,* clock timestamp data), while preventing any platform software from modifying secure clock 523.

In general, SoC 504 may comprise a single core processor or a multi-core processor, such as depicted by *M* cores 505. The multiple cores are employed to execute various software components 524, such as modules and applications, which are stored in one or more non-volatile storage devices, as depicted by disk drive 514. More generally, disk drive 514 is representative of various types of non-volatile storage devices, including both magnetic- and optical-based storage devices, as well as solid-state storage devices, such as solid state drives (SSDs) or Flash memory. Optionally, all or a portion of software components 524 may be stored on one or more storage devices (not shown) that are accessed via a network 526.

During boot up or run-time operations, various software components 524 and firmware components 528 are loaded into system memory 512 and executed on cores 505 as processes comprising execution threads or the like. Depending on the particular processor or SoC architecture, a given "physical" core may be implemented as one or more logical cores, with processes being allocated to the various logical cores. For example, under the Intel® Hyperthreading™ architecture, each physical core is implemented as two logical cores.

Under a typical system boot for platform hardware 502, firmware 528 will be loaded and configured in system memory 512, followed by booting a host OS 530. Subsequently, a hypervisor 532, which may generally comprise an application running on host OS 530, will be launched. Hypervisor 532 may then be employed to launch various virtual machines, VM_{1-*N*}, each of which will be configured to use various portions (*i.e.,* address spaces) of system memory 512. In turn, each virtual machine VM_{1-*N*} may be employed to host a respective operating system 534_{1-*N*}.

During run-time operations, hypervisor 532 enables reconfiguration of various system resources, such as system memory 512, cores 505, and disk drive(s) 514. Generally, the virtual machines provide abstractions (in combination with hypervisor 532) between their hosted operating system and the underlying platform hardware 502, enabling the hardware resources to be shared among VM_{1-*N*}. From the viewpoint of each hosted operating system, that operating system "owns" the entire platform, and is unaware of the existence of other operating systems running on virtual machines. In reality, each operating system merely has access to only the resources and/or resource portions allocated to it by hypervisor 532.

As further illustrated in Figure 5, each operating system includes a kernel space and a user space, both of which are implemented as memory spaces in system memory 512. The kernel space is protected and used to run operating system kernel components, including a networking stack. Meanwhile, an operating system's user space is used to run user applications, as depicted by NFV Appliances 1, 2, and *N*, and Applications 1A-C, 2A-C, and *N*A-C.

Generally, NFV Appliances 1, 2, and *N* are illustrative of various SDN or NFV appliances that may run on virtual machines on platform hardware 502. For simplicity, each VM_{1-*N*} is depicted as hosting a similar set of software applications; however, this is merely for illustrative purposes, as the VMs for a given platform may host similar applications, or may host different applications. Similarly, each VM_{1-*N*} may host a single virtual network appliance (as shown), may host multiple virtual network appliances, or may not host any virtual network appliances. During runtime operations, timing data for use in QoS measurements is accessed from secure clock 523 via CSE 521. For example, this may be done through use of a CSE device driver or similar means. As this is the only means for accessing secure clock 523, the secure clock is tamper proof, and thus the QoS timing data is reliable.

For implementations that include endpoints in separate network nodes that do not share the same secure clock, a precision time protocol (PTP) may be used to synchronize clocks on the separate network nodes. A first version of a PTP was originally defined by IEEE 1588-2002 "Standard for a Precision Clock Synchronization Protocol for Networked. Measurement and Control Systems," published in 2002. In 2008, IEEE 1588-2008 was released as a revised standard; also known as PTP Version 2.

For example, under the embodiment shown in Figure 2, the first and second Ethernet Controllers might be installed in the same server platform, in which signals from a common secure clock may be used, or they may be installed in separate server platforms, in which case PTP Version 2 could be used.

The embodiments disclosed herein provide significant improvements over existing end-to-end QoS measurements. Significantly, since the source of the timestamp data is secure and tamper-resistant, there is no way that the clock data can be compromised, thus enhancing the validity and reliability of the measurements. Moreover, the schemes may be implemented for securing and accurately measuring QoS in virtualized environments employing NFV appliances and the like.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

In the description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other.

An embodiment is an implementation or example of the inventions. Reference in the specification to "an embodiment," "one embodiment," "some embodiments," or "other embodiments" means that a particular feature, structure, or characteristic described in connection with the embodiments is included in at least some embodiments, but not necessarily all embodiments, of the inventions. The various appearances "an embodiment," "one embodiment," or "some embodiments" are not necessarily all referring to the same embodiments.

Not all components, features, structures, characteristics, *etc.* described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

As discussed above, various aspects of the embodiments herein may be facilitated by corresponding software and/or firmware components and applications, such as software and/or firmware executed by an embedded processor or the like. Thus, embodiments of this invention may be used as or to support a software program, software modules, firmware, and/or distributed software executed upon some form of processor, processing core or embedded logic a virtual machine running on a processor or core or otherwise implemented or realized upon or within a computer-readable or machine-readable non-transitory storage medium. A computer-readable or machine-readable non-transitory storage medium includes any mechanism for storing or transmitting information in a form readable by a machine (*e.g.,* a computer). For example, a computer-readable or machine-readable non-transitory storage medium includes any mechanism that provides (*i.e.,* stores and/or transmits) information in a form accessible by a computer or computing machine (*e.g.,* computing device, electronic system, *etc.*), such as recordable/non-recordable media (*e.g.,* read only memory (ROM), random access memory (RAM), magnetic disk storage media, optical storage media, flash memory devices, *etc*.). The content may be directly executable ("object" or "executable" form), source code, or difference code ("delta" or "patch" code). A computer-readable or machine-readable non-transitory storage medium may also include a storage or database from which content can be downloaded. The computer-readable or machine-readable non-transitory storage medium may also include a device or product having content stored thereon at a time of sale or delivery. Thus, delivering a device with stored content, or offering content for download over a communication medium may be understood as providing an article of manufacture comprising a computer-readable or machine-readable non-transitory storage medium with such content described herein.

Various components referred to above as processes, servers, or tools described herein may be a means for performing the functions described. The operations and functions performed by various components described herein may be implemented by software running on a processing element, via embedded hardware or the like, or any combination of hardware and software.

Such components may be implemented as software modules, hardware modules, special-purpose hardware (*e.g.,* application specific hardware, ASICs, DSPs, *etc.*), embedded controllers, hardwired circuitry, hardware logic, *etc.* Software content (*e.g.,* data, instructions, configuration information, *etc.*) may be provided via an article of manufacture including computer-readable or machine-readable non-transitory storage medium, which provides content that represents instructions that can be executed. The content may result in a computer performing various functions/operations described herein.

As used herein, a list of items joined by the term "at least one of' can mean any combination of the listed terms. For example, the phrase "at least one of A, B or C" can mean A; B; C; A and B; A and C; B and C; or A, B and C.

## Claims

1. A method for securely measuring end-to-end Quality of Service, QoS, in a network, comprising:
at a first endpoint comprising a first physical Ethernet controller (100a) or Physical Network Interface Controller, NIC (400),
detecting (102a) a first packet (200) marked for QoS measurement;
generating (104a), using a secure clock (106a), a first timestamp for the first packet (200);
determining packet identifying metadata for the first packet;
reporting (108a) the first timestamp and the packet identifying metadata for the first packet (200) to an external monitor (110);
at a second endpoint comprising a second physical Ethernet controller (100b) or physical NIC (400),
detecting (102b) the first packet (200) is marked for QoS measurement;
generating (104b), using a secure clock (106b), a second timestamp for the first packet (200);
determining packet identifying metadata for the first packet;
reporting (108b) the second timestamp and the packet identifying metadata for the first packet (200) to the external monitor (110); and
employing the first and second timestamps and the packet identifying metadata for the first packet (200) to measure a latency incurred by the first packet from the first endpoint to the second endpoint.

2. The method of any of the preceding claims, further comprising marking the first packet (200) for QoS measurement.

3. The method of any of the preceding claims, wherein at least one of the first and second endpoints is implemented in a host platform (500), and wherein a packet processing path for the first packet (200) between the first and second endpoints does not traverse an operating system network stack for the host platform.

4. The method of any of the preceding claims, wherein a packet processing path for the first packet (200) between the first and second endpoints includes a plurality of Network Function Virtualization, NFV, appliances (202_{1...N}).

5. The method of any of the preceding claims, further comprising:
at the first endpoint,
receiving a second packet,
detecting that the second packet is not marked for QoS measurement;
forwarding the second packet along a normal packet processing path;
at the second endpoint,
detecting that the second packet is not marked for QoS measurement; and
forwarding the second packet along a normal packet processing path.

6. An Ethernet controller (100), comprising:
a plurality of ports including input ports and output ports;
one of a secure clock (106) or an interface for receiving timestamp data generated by a secure clock;
an interface for communicating with an external monitor (110) when the Ethernet controller (100) is operating; and
embedded logic configured to perform operations when the Ethernet controller (100) is operating, including,
in response to receiving a first packet at a first port,
detecting (102) the first packet is marked for QoS measurement;
generating (104), using the secure clock (106), a first timestamp for the first packet or receiving a first timestamp for the first packet via the interface for receiving timestamp data generated by a secure clock;
determining packet identifying metadata for the first packet;
reporting (108) the first timestamp and the packet identifying metadata for the first packet to the external monitor (110);
at a second port,
detecting the first packet is marked for QoS measurement;
generating, using the secure clock, a second timestamp for the first packet or receiving a second timestamp for the first packet via the interface for receiving timestamp data generated by a secure clock;
determining packet identifying metadata for the first packet;
reporting the second timestamp and the packet identifying metadata for the first packet to the external monitor,
wherein the first and second timestamps and the packet identifying metadata for the first packet are configured to enable the external monitor to measure a latency incurred by the first packet as it traverses a packet processing path between the first port and the second port.

7. The Ethernet controller (100) of claim 6, wherein the embedded logic includes at least one processor and memory to store instructions configured to be executed by the at least one processor to effect the operations.

8. The Ethernet controller (100) of claim 6 or 7, wherein the packet identifying metadata comprises a flow ID.

9. The Ethernet controller (100) of claim 8, wherein the embedded logic is configured to perform a hash on multiple header field values in the first packet to determine the flow ID.

10. The Ethernet controller (100) of any of claims 6-9, wherein the embedded logic is configured to perform further operations comprising:
at the first port,
receiving a second packet,
detecting that the second packet is not marked for QoS measurement;
forwarding the second packet along a normal packet processing path;
at the second port,
detecting that the second packet is not marked for QoS measurement; and
forwarding the second packet along a normal packet processing path.

11. A non-transient machine readable medium having instructions stored thereon configured to be executed on one or more processors in a compute platform having a secure clock (106), wherein execution of the instructions perform operations comprising:
implementing a virtual switch (100), the virtual switch having a plurality of virtual ports;
at a first virtual port,
detecting (102) a first packet marked for QoS measurement;
generating (104), using the secure clock (106), a first timestamp for the first packet;
determining packet identifying metadata for the first packet;
reporting (108) the first timestamp and the packet identifying metadata for the first packet to an external monitor (110);
at a second virtual port,
detecting the first packet is marked for QoS measurement;
generating, using the secure clock (106), a second timestamp for the first packet;
determining packet identifying metadata for the first packet;
reporting the second timestamp and the packet identifying metadata for the first packet to the external monitor (110),
wherein the first and second timestamps and the packet identifying metadata for the first packet are configured to enable the external monitor (110) to measure a latency incurred by the first packet as it traverses a packet processing path between the first virtual port and the second virtual port.

12. The non-transient machine-readable medium of claim 11, wherein the virtual switch (100) is connected to a plurality of virtual machines collectively hosting a plurality of Network Function Virtualization, NFV, appliances (202_{1...N}), and the packet processing path includes processing performed on the first packet by the plurality of NFV appliances (202_{1...N}).

13. The non-transient machine-readable medium of claim 11 or 12, wherein execution of the instructions perform further operations comprising:
at the first virtual port,
receiving a second packet,
detecting that the second packet is not marked for QoS measurement;
forwarding the second packet along a normal packet processing path;
at the second virtual port,
detecting that the second packet is not marked for QoS measurement; and
forwarding the second packet along a normal packet processing path.

14. The non-transient machine-readable medium of any of claims 11-13, further comprising instructions for implementing operations performed by the external monitor (110), including:
determining the first and second timestamp correspond to timestamps for the first packet using the packet identifying metadata reported from the first virtual port and the second virtual port;
determining a flow to which the first packet is associated;
calculating the QoS measurement as a difference between the second timestamp and the first timestamp; and
associating the QoS measurement that is calculated with the flow to which the first packet is associated.

15. The non-transient machine-readable medium of any of claims 11-14, further comprising instructions for implementing operations performed by the external monitor (110), including:
determining using the packet identifying metadata reported from the first virtual port that the first packet is a first packet for a given flow for which QoS measurements are to be determined;
determining using the packet identifying metadata reported from the second virtual port that the first packet is the first packet for the given flow for which QoS measurements are to be determined that has reached the second virtual port; and
calculating the QoS measurement as a difference between the second timestamp and the first timestamp.

## Patentansprüche

1. Verfahren zum sicheren Messen von Dienstgüte QoS von Ende zu Ende in einem Netzwerk, umfassend:
in einem ersten Endpunkt, der eine erste physische Ethernet-Steuerung (100a) oder physische Netzwerkschnittstellensteuerung NIC (400) umfasst:
Detektieren (102a) eines für QoS-Messung markierten ersten Pakets (200);
Erzeugen (104a) eines ersten Zeitstempels für das erste Paket (200) unter Verwendung eines sicheren Zeitgebers (106a);
Bestimmen von paketidentifizierenden Metadaten für das erste Paket;
Melden (108a) des ersten Zeitstempels und der paketidentifizierenden Metadaten für das erste Paket (200) an eine externe Überwachungsvorrichtung (110);
in einem zweiten Endpunkt, der eine zweite physische Ethernet-Steuerung (100b) oder physische NIC (400) umfasst:
Detektieren (102b), dass das erste Paket (200) für QoS-Messung markiert ist;
Erzeugen (104b) eines zweiten Zeitstempels für das erste Paket (200) unter Verwendung eines sicheren Zeitgebers (106b);
Bestimmen von paketidentifizierenden Metadaten für das erste Paket;
Melden (108b) des zweiten Zeitstempels und der paketidentifizierenden Metadaten für das erste Paket (200) an die externe Überwachungsvorrichtung (110); und
Verwenden des ersten und zweiten Zeitstempels und der paketidentifizierenden Metadaten für das erste Paket (200) zum Messen einer Latenz, die das erste Paket von dem ersten Endpunkt zu dem zweiten Endpunkt erfahren hat.

2. Verfahren nach einem der vorhergehenden Ansprüche, das ferner Markieren des ersten Pakets (200) für QoS-Messung umfasst.

3. Verfahren nach einem der vorhergehenden Ansprüche, wobei der erste und/oder der zweite Endpunkt in einer Hostplattform (500) implementiert sind und wobei ein Paketverarbeitungspfad für das erste Paket (200) zwischen dem ersten und zweiten Endpunkt einen Betriebssystem-Netzwerkstapel für die Hostplattform nicht durchquert.

4. Verfahren nach einem der vorhergehenden Ansprüche, wobei ein Paketverarbeitungspfad für das erste Paket (200) zwischen dem ersten und zweiten Endpunkt mehrere Geräte (202_{1...N}) der Netzwerkfunktionsvirtualisierung NFV umfasst.

5. Verfahren nach einem der vorhergehenden Ansprüche, ferner umfassend:
in dem ersten Endpunkt:
Empfangen eines zweiten Pakets,
Detektieren, dass das zweite Paket nicht für QoS-Messung markiert ist;
Weiterleiten des zweiten Pakets auf einem normalen Paketverarbeitungspfad;
in dem zweiten Endpunkt:
Detektieren, dass das zweite Paket nicht für QoS-Messung markiert ist; und
Weiterleiten des zweiten Pakets auf einem normalen Paketverarbeitungspfad.

6. Ethernet-Steuerung (100), umfassend:
mehrere Ports, darunter Eingangsports und Ausgangsports;
einen sicheren Zeitgeber (106) oder eine Schnittstelle zum Empfangen von durch einen sicheren Zeitgeber erzeugten Zeitstempeldaten;
eine Schnittstelle zum Kommunizieren mit einer externen Überwachungsvorrichtung (110), wenn die Ethernet-Steuerung (100) arbeitet; und
eingebettete Logik, die dafür ausgelegt ist, Operationen auszuführen, wenn die Ethernet-Steuerung (100) arbeitet, darunter
als Reaktion auf Empfang eines ersten Pakets an einem ersten Port:
Detektieren (102), dass das erste Paket für QoS-Messung markiert ist;
Erzeugen (104) eines ersten Zeitstempels für das erste Paket unter Verwendung des sicheren Zeitgebers (106) oder Empfangen eines ersten Zeitstempels für das erste Paket über die Schnittstelle zum Empfangen von durch einen sicheren Zeitgeber erzeugten Zeitstempeldaten;
Bestimmen von paketidentifizierenden Metadaten für das erste Paket;
Melden (108) des ersten Zeitstempels und der paketidentifizierenden Metadaten für das erste Paket an die externe Überwachungsvorrichtung (110);
in einem zweiten Port:
Detektieren, dass das erste Paket für QoS-Messung markiert ist;
Erzeugen eines zweiten Zeitstempels für das erste Paket unter Verwendung des sicheren Zeitgebers oder Empfangen eines zweiten Zeitstempels für das erste Paket über die Schnittstelle zum Empfangen von durch einen sicheren Zeitgeber erzeugten Zeitstempeldaten;
Bestimmen von paketidentifizierenden Metadaten für das erste Paket;
Melden des zweiten Zeitstempels und der paketidentifizierenden Metadaten für das erste Paket an die externe Überwachungsvorrichtung,
wobei der erste und zweite Zeitstempel und die paketidentifizierenden Metadaten für das erste Paket dafür ausgelegt sind, es der externen Überwachungsvorrichtung zu ermöglichen, eine Latenz zu messen, die das erste Paket erfährt, während es einen Paketverarbeitungspfad zwischen dem ersten Port und dem zweiten Port durchquert.

7. Ethernet-Steuerung (100) nach Anspruch 6, wobei die eingebettete Logik mindestens einen Prozessor und Speicher zum Speichern von Anweisungen umfasst, die dafür ausgelegt sind, durch den mindestens einen Prozessor ausgeführt zu werden, um die Operationen zu bewirken.

8. Ethernet-Steuerung (100) nach Anspruch 6 oder 7, wobei die paketidentifizierenden Metadaten eine Fluss-ID umfassen.

9. Ethernet-Steuerung (100) nach Anspruch 8, wobei die eingebettete Logik dafür ausgelegt ist, ein Hash an mehreren Headerfeldwerten in dem ersten Paket auszuführen, um die Fluss-ID zu bestimmen.

10. Ethernet-Steuerung (100) nach einem der Ansprüche 6-9, wobei die eingebettete Logik dafür ausgelegt ist, weitere Operationen auszuführen, umfassend:
in dem ersten Port:
Empfangen eines zweiten Pakets,
Detektieren, dass das zweite Paket nicht für QoS-Messung markiert ist;
Weiterleiten des zweiten Pakets auf einem normalen Paketverarbeitungspfad;
in dem zweiten Port:
Detektieren, dass das zweite Paket nicht für QoS-Messung markiert ist; und
Weiterleiten des zweiten Pakets auf einem normalen Paketverarbeitungspfad.

11. Nichttransientes maschinenlesbares Medium mit darauf gespeicherten Anweisungen, die dafür ausgelegt sind, auf einem oder mehreren Prozessoren in einer Rechenplattform mit einem sicheren Zeitgeber (106) ausgeführt zu werden, wobei Ausführung der Anweisungen Operationen ausführt, umfassend:
Implementieren eines virtuellen Switch (100), wobei der virtuelle Switch mehrere virtuelle Ports aufweist;
in einem ersten virtuellen Port:
Detektieren (102) eines für QoS-Messung markierten ersten Pakets;
Erzeugen (104) eines ersten Zeitstempels für das erste Paket unter Verwendung des sicheren Zeitgebers (106) ;
Bestimmen von paketidentifizierenden Metadaten für das erste Paket;
Melden (108) des ersten Zeitstempels und der paketidentifizierenden Metadaten für das erste Paket an eine externe Überwachungsvorrichtung (110);
in einem zweiten virtuellen Port:
Detektieren, dass das erste Paket für QoS-Messung markiert ist;
Erzeugen eines zweiten Zeitstempels für das erste Paket unter Verwendung eines sicheren Zeitgebers (106);
Bestimmen von paketidentifizierenden Metadaten für das erste Paket;
Melden des zweiten Zeitstempels und der paketidentifizierenden Metadaten für das erste Paket an die externe Überwachungsvorrichtung (110),
wobei der erste und zweite Zeitstempel und die paketidentifizierenden Metadaten für das erste Paket dafür ausgelegt sind, es der externen Überwachungsvorrichtung (110) zu ermöglichen, eine Latenz zu messen, die das erste Paket erfährt, während es einen Paketverarbeitungspfad zwischen dem ersten virtuellen Port und dem zweiten virtuellen Port durchquert.

12. Nichttransientes maschinenlesbares Medium nach Anspruch 11, wobei der virtuelle Switch (100) mit mehreren virtuellen Maschinen verbunden ist, die kollektiv mehrere Geräte (202_{1...N}) der Netzwerkfunktionsvirtualisierungen NFV hosten, und der Paketverarbeitungspfad Verarbeitung umfasst, die durch die mehreren NFV-Geräte (202_{1...N}) an dem ersten Paket ausgeführt wird.

13. Nichttransientes maschinenlesbares Medium nach Anspruch 11 oder 12, wobei Ausführung der Anweisungen weitere Operationen ausführt, umfassend:
in dem ersten virtuellen Port:
Empfangen eines zweiten Pakets,
Detektieren, dass das zweite Paket nicht für QoS-Messung markiert ist;
Weiterleiten des zweiten Pakets auf einem normalen Paketverarbeitungspfad;
in dem zweiten virtuellen Port:
Detektieren, dass das zweite Paket nicht für QoS-Messung markiert ist; und
Weiterleiten des zweiten Pakets auf einem normalen Paketverarbeitungspfad.

14. Nichttransientes maschinenlesbares Medium nach einem der Ansprüche 11-13, das ferner Anweisungen zum Implementieren von Operationen umfasst, die durch die externe Überwachungsvorrichtung (110) ausgeführt werden, darunter:
Bestimmen, dass der erste und zweite Zeitstempel Zeitstempeln für das erste Paket entsprechen, unter Verwendung der von dem ersten virtuellen Port und dem zweiten virtuellen Port gemeldeten paketidentifizierenden Metadaten;
Bestimmen eines Flusses, mit dem das erste Paket assoziiert ist;
Berechnen der QoS-Messung als Differenz zwischen dem zweiten Zeitstempel und dem ersten Zeitstempel; und
Assoziieren der QoS-Messung, die berechnet wird, mit dem Fluss, mit dem das erste Paket assoziiert ist.

15. Nichttransientes maschinenlesbares Medium nach einem der Ansprüche 11-14, das ferner Anweisungen zum Implementieren von Operationen umfasst, die durch die externe Überwachungsvorrichtung (110) ausgeführt werden, darunter:
Bestimmen, dass das erste Paket ein erstes Paket für einen gegebenen Fluss ist, wofür QoS-Messungen bestimmt werden sollen, unter Verwendung der von dem ersten virtuellen Port gemeldeten paketidentifizierenden Metadaten;
Bestimmen, dass das erste Paket das erste Paket für den gegebenen Fluss ist, wofür QoS-Messungen bestimmt werden sollen, das den zweiten virtuellen Port erreicht hat, unter Verwendung der von dem zweiten virtuellen Port gemeldeten paketidentifizierenden Metadaten; und
Berechnen der QoS-Messung als Differenz zwischen dem zweiten Zeitstempel und dem ersten Zeitstempel.

## Revendications

1. Procédé de mesure sécurisée d'une qualité de service, QoS, de bout en bout dans un réseau, comprenant :
au niveau d'un premier point d'accès comprenant un premier contrôleur Ethernet physique (100a) ou contrôleur d'interface de réseau physique, NIC (400),
la détection (102a) d'un premier paquet (200) marqué en vue d'une mesure de QoS ;
la génération (104a), à l'aide d'une horloge sécurisée (106a), d'une première estampille temporelle pour le premier paquet (200) ;
la détermination de métadonnées d'identification de paquet pour le premier paquet ;
la déclaration (108a) de la première estampille temporelle et des métadonnées d'identification de paquet pour le premier paquet (200) à une unité de visualisation externe (110) ;
au niveau d'un second point d'accès comprenant un second contrôleur Ethernet physique (100b) ou NIC physique (400),
la détection (102b) que le premier paquet (200) est marqué en vue d'une mesure de QoS ;
la génération (104b), à l'aide d'une horloge sécurisée (106b), d'une seconde estampille temporelle pour le premier paquet (200) ;
la détermination de métadonnées d'identification de paquet pour le premier paquet ;
la déclaration (108b) de la seconde estampille temporelle et des métadonnées d'identification de paquet pour le premier paquet (200) à l'unité de visualisation externe (110) ; et
l'emploi des première et seconde estampilles temporelles et des métadonnées d'identification de paquet pour le premier paquet (200) pour mesurer une latence encourue par le premier paquet du premier point d'accès au second point d'accès.

2. Procédé selon l'une quelconque des revendications précédentes, comprenant en outre le marquage du premier paquet (200) en vue d'une mesure de QoS.

3. Procédé selon l'une quelconque des revendications précédentes, dans lequel au moins un des premier et second points d'accès est mis en œuvre dans une plate-forme hôte (500), et dans lequel un chemin de traitement de paquet pour le premier paquet (200) entre les premier et second points d'accès ne traverse pas une pile de réseau de système d'exploitation de la plate-forme hôte.

4. Procédé selon l'une quelconque des revendications précédentes, dans lequel un chemin de traitement de paquet pour le premier paquet (200) entre les premier et second points d'accès comporte une pluralité d'appareils de virtualisation de fonction de réseau, NFV, (202_{1...N}).

5. Procédé selon l'une quelconque des revendications précédentes, comprenant en outre :
au niveau du premier point d'accès,
la réception d'un second paquet,
la détection que le second paquet n'est pas marqué en vue d'une mesure de QoS ;
le transfert du second paquet le long d'un chemin de traitement de paquet normal ;
au niveau du second point d'accès,
la détection que le second paquet n'est pas marqué en vue d'une mesure de QoS ; et
le transfert du second paquet le long d'un chemin de traitement de paquet normal.

6. Contrôleur Ethernet (100), comprenant :
une pluralité de ports comportant des ports d'entrée et des ports de sortie ;
une horloge sécurisée (106) ou une interface pour recevoir des données d'estampilles temporelles générées par une horloge sécurisée ;
une interface pour communiquer avec une unité de visualisation externe (110) quand le contrôleur Ethernet (100) fonctionne ; et
une logique intégrée configurée pour réaliser des opérations quand le contrôleur Ethernet (100) fonctionne, comportant,
en réponse à la réception d'un premier paquet au niveau d'un premier port,
la détection (102) que le premier paquet est marqué en vue d'une mesure de QoS ;
la génération (104), à l'aide de l'horloge sécurisée (106), d'une première estampille temporelle pour le premier paquet ou la réception d'une première estampille temporelle pour le premier paquet par l'intermédiaire de l'interface de réception de données d'estampilles temporelles générées par une horloge sécurisée ;
la détermination de métadonnées d'identification de paquet pour le premier paquet ;
la déclaration (108) de la première estampille temporelle et des métadonnées d'identification de paquet pour le premier paquet à l'unité de visualisation externe (110) ;
au niveau d'un second port,
la détection que le paquet est marqué en vue d'une mesure de QoS ;
la génération, à l'aide de l'horloge sécurisée, d'une seconde estampille temporelle pour le premier paquet ou la réception d'une seconde estampille temporelle pour le premier paquet par l'intermédiaire de l'interface de réception de données d'estampilles temporelles générées par une horloge sécurisée ;
la détermination de métadonnées d'identification de paquet pour le premier paquet ;
la déclaration de la seconde estampille temporelle et des métadonnées d'identification de paquet pour le premier paquet à l'unité de visualisation externe,
dans lequel les première et seconde estampilles temporelles et les métadonnées d'identification de paquet pour le premier paquet sont configurées pour permettre à l'unité de visualisation externe de mesurer une latence encourue par le premier paquet lors de sa traversée d'un chemin de traitement de paquet entre le premier port et le second port.

7. Contrôleur Ethernet (100) selon la revendication 6, dans lequel la logique intégrée comporte au moins un processeur et une mémoire pour mémoriser des instructions configurées pour être exécutées par l'au moins un processeur afin d'effectuer les opérations.

8. Contrôleur Ethernet (100) selon la revendication 6 or 7, dans lequel les métadonnées d'identification de paquet comprennent une ID de flux.

9. Contrôleur Ethernet (100) selon la revendication 8, dans lequel la logique intégrée est configurée pour réaliser un hachage sur de multiples valeurs de champs d'en-tête dans le premier paquet pour déterminer l'ID de flux.

10. Contrôleur Ethernet (100) selon l'une quelconque des revendications 6 à 9, dans lequel la logique intégrée est configurée pour réaliser d'autres opérations comprenant :
au niveau du premier port,
la réception d'un second paquet,
la détection que le second paquet n'est pas marqué en vue d'une mesure de QoS ;
le transfert du second paquet le long d'un chemin de traitement de paquet normal ;
au niveau du second port,
la détection que le second paquet n'est pas marqué en vue d'une mesure de QoS ; et
le transfert du second paquet le long d'un chemin de traitement de paquet normal.

11. Support non transitoire lisible par machine sur lequel sont mémorisées des instructions configurées pour être exécutées sur un ou plusieurs processeurs dans une plate-forme informatique présentant une horloge sécurisée (106), l'exécution des instructions pour réaliser des opérations comprenant :
la mise en œuvre d'un commutateur virtuel (100), le commutateur virtuel présentant une pluralité de ports virtuels ;
au niveau d'un premier port virtuel,
la détection (102) d'un premier paquet marqué en vue d'une mesure de QoS ;
la génération (104), à l'aide de l'horloge sécurisée (106), d'une première estampille temporelle pour le premier paquet ;
la détermination de métadonnées d'identification de paquet pour le premier paquet ;
la déclaration (108) de la première estampille temporelle et des métadonnées d'identification de paquet pour le premier paquet à une unité de visualisation externe (110) ;
au niveau d'un second port virtuel,
la détection que le premier paquet est marqué en vue d'une mesure de QoS ;
la génération, à l'aide de l'horloge sécurisée (106), d'une seconde estampille temporelle pour le premier paquet ;
la détermination de métadonnées d'identification de paquet pour le premier paquet ;
la déclaration de la seconde estampille temporelle et des métadonnées d'identification de paquet pour le premier paquet à l'unité de visualisation externe (110),
dans lequel les première et secondes estampilles temporelles et les métadonnées d'identification de paquet pour le premier paquet sont configurées pour permettre à l'unité de visualisation externe (110) de mesurer une latence encourue par le premier paquet lors de sa traversée d'un chemin de traitement de paquet entre le premier port virtuel et le second port virtuel.

12. Support non transitoire lisible par machine selon la revendication 11, dans lequel le commutateur virtuel (100) est connecté à une pluralité de machines virtuelles hébergeant collectivement une pluralité d'appareils de virtualisation de fonction de réseau, NFV, (202_{1...N}), et le chemin de traitement de paquet comporte un traitement réalisé sur le premier paquet par la pluralité d'appareils NFV (202_{1...N}).

13. Support non transitoire lisible par machine selon la revendication 11 ou 12, dans lequel l'exécution des instructions réalise d'autres opérations comprenant :
au niveau du premier port virtuel,
la réception d'un second paquet,
la détection que le second paquet n'est pas marqué en vue d'une mesure de QoS ;
le transfert du second paquet le long d'un chemin de traitement de paquet normal ;
au niveau du second port virtuel,
la détection que le second paquet n'est pas marqué en vue d'une mesure de QoS ; et
le transfert du second paquet le long d'un chemin de traitement de paquet normal.

14. Support non transitoire lisible par machine selon l'une quelconque des revendications 11 à 13, comprenant en outre des instructions pour mettre en œuvre des opérations réalisées par l'unité de visualisation externe (110), comportant :
la détermination que les première et seconde estampilles temporelles correspondent à des estampilles temporelles pour le premier paquet à l'aide des métadonnées d'identification de paquet déclarées par le premier port virtuel et le second port virtuel ;
la détermination d'un flux auquel est associé le premier paquet ;
le calcul de la mesure de QoS en tant que différence entre la seconde estampille temporelle et la première estampille temporelle ; et
l'association de la mesure de QoS calculée au flux auquel est associé le premier paquet.

15. Support non transitoire lisible par machine selon l'une quelconque des revendications 11 à 14, comprenant en outre des instructions pour mettre en œuvre des opérations réalisées par l'unité de visualisation externe (110), comportant :
la détermination à l'aide des métadonnées d'identification de paquet déclarées par le premier port virtuel que le premier paquet est un premier paquet pour un flux donné pour lequel des mesures de QoS doivent être déterminées ;
la détermination à l'aide des métadonnées d'identification de paquet déclarées par le second port virtuel que le premier paquet est le premier paquet pour le flux de données pour lequel des mesures de QoS doivent être déterminées qui a atteint le second port virtuel ; et
le calcul de la mesure de QoS en tant que différence entre la seconde estampille temporelle et la première estampille temporelle.
